# EUROPEAN PATENT SPECIFICATION

(11) **EP 4 438 480 B1**
(45) Date of publication and mention of the grant of the patent: **06.05.2026**
(21) Application number: 23165283.5
(22) Date of filing: 30.03.2023
(51) Int. Cl.: B64D 11/06

(54) **SEAT MOUNTING SYSTEM WITH A STRAIGHT HOLDING EDGE**
SITZBEFESTIGUNGSSYSTEM MIT GERADER HALTEKANTE
SYSTÈME DE MONTAGE DE SIÈGE AVEC UN BORD DE RETENUE DROIT

(43) Date of publication of application: 02.10.2024
(73) Proprietor: Airbus Operations GmbH, 21129 Hamburg (DE)
(72) Inventor: Robrecht, Volker, 21129 Hamburg (DE); Vollmer, Malte, 21129 Hamburg (DE)

(56) References cited:
- US-A1- 2012 299 352
- US-A1- 2019 106 217
- US-A1- 2020 086 966

## Description

The present disclosure generally relates to a seat mounting system for passenger vehicles. Particularly, the present disclosure relates to a seat mounting system with a seat rail having a plurality of holes in an upper portion, the holes having a straight edge. The present disclosure further relates to a vehicle comprising such mounting system.

Document US2012299352A1 discloses a vehicle seat interface assembly having a track including a web having a substantially uniform thickness and one of a key and a key slot. A seat bracket is operably connected with a vehicle seat. The seat bracket includes a support that has the other of the key and the key slot disposed thereon. The key includes first and second side portions. The space defined between the first side portion and the support is greater than the thickness of the web. The space defined between the second side portion and the support is less than the thickness of the web, such that the key may be inserted into the key slot and laterally translated until the web is frictionally secured between the second side portion and the support. Document US2020086966A1 discloses an aircraft flooring system which includes a floor beam, a seat track having a base flange, the base flange including a plurality of apertures, where the one or more of the apertures have a diamond-shaped profile, a seat track fitting coupleable to the seat track via the diamond-shaped profile of the plurality of apertures of the seat track, and a first floor panel. The aircraft flooring system also includes an edge panel that is sized and shaped to couple the first floor panel to the seat track. Document US2019106217A1 discloses an integrable seat leg for an equipment manufacturer seat, including a vertical member, including a front end and a rear end, a first side surface and a second side surface, a top surface and a bottom surface, one or more engaging members extending from the bottom surface, and one or more through-bores arranged proximate the top surface to secure the integrable seat leg to the seat, wherein the one or more engaging members are operatively arranged to engage one or more respective apertures in track.

In current passenger vehicles, such as aircrafts, buses and trains, seat rows are mounted to a floor of the vehicle using the seat rails arranged along a longitudinal direction of the vehicle. Such seat rails comprise a continuous opening extending in a longitudinal direction, along which a seat foot can glide. In order to insert and mount the seat foot (in)to the seat rail, the seat rail has a crown portion with a corrugated longitudinal opening. Due to the corrugations, wider crown portions allow insertion of the seat foot, while narrow crown portions allow mounting the seat foot to the narrow crown portion.

A drawback of such seat rails is the large opening in the crown portion over the lengths of the seat rail. Thus, items can fall and/or liquids can flow into the crown portion, which may affect the condition of the seat rail. For instance, current seat rails often suffer from corrosion due to liquids accumulating in the crown portion. Moreover, the manufacturing of such seat rails is time consuming and, hence, comes with high manufacturing costs.

It is therefore an object of the present disclosure to provide an improved seat mounting system for a vehicle

This object is solved by the present invention as defined in independent claim 1.

Preferred embodiments are defined by the dependent claims.

According to a first aspect to better understand the present disclosure, a seat mounting system comprises a seat rail configured to be mounted to a floor, and a seat fitting configured to be coupled with the seat rail. The seat rail comprises an upper portion having a plurality of holes, wherein each hole comprises a straight edge extending in a transverse direction of the seat rail. The transverse direction of the seat rail is arranged perpendicular to a longitudinal direction of the seat rail. Since the longitudinal direction of the seat rail usually corresponds to the longitudinal direction of the vehicle, in which the seat rail is mounted, the straight edge also extends along a cross-section of the vehicle.

Furthermore, the seat fitting comprises at least one hook configured to be inserted into one of the plurality of holes and to hook around the straight edge, and a fastener arranged above an upper surface of the upper portion, when the at least one hook hooks around the straight edge, wherein the fastener is configured to press against the upper portion of the seat rail, and, when moving towards the at least one hook, to pull the at least one hook towards the fastener, thereby clamping the at least one hook to the upper portion of the seat rail.

In an implementation variant, the straight edge delimits the associated hole at a front side of the hole, i.e. a side of the hole in the longitudinal direction of the seat rail that will be closer to a front of the vehicle, once the seat rail is installed. This allows the hook to hook into the straight edge of the seat rail due to forces acting on the seat fitting during deceleration of the vehicle, which will be the most common load case including higher forces.

In another implementation variant, the hole can comprise further edges, at least some of which can also be straight. The remaining sides/edges of the hole may have any form, for example, to provide a hole of sufficient size for the hook to be inserted. In yet another implementation variant, the plurality of holes is arranged equidistant to one another. This allows mounting the seat fitting at regular intervals. As a mere examples, the distance between the straight edges of two adjacent holes can be 1.27 cm, 2.54 cm, 5.08 cm (0.5 inch, 1 inch, 2 inch) or more.

In a further implementation variant, the seat rail can further comprise a supporting structure arranged underneath the upper portion excluding an area underneath the holes. The supporting structure, for example, can have a vertical portion, a horizontal portion, a slant or diagonal portion or the like. Each of these portions is arranged that at least an area underneath the holes is left free of the supporting structure. This allows any fluid unintentionally entering through one of the holes to flow away. Thus, corrosion of the seat rail can be avoided or at least reduced and/or slowed.

In yet a further implementation variant, the at least one hook can comprise a horizontal protrusion sized to fit through the hole in a substantially vertical movement and to abut against a bottom surface of the upper portion. It is to be understood that the upper portion of the seat rail is arranged substantially horizontally, so that the horizontal protrusion of the hook mates with (an underside of) the upper portion. The horizontal protrusion allows clamping the seat fitting to the seat rail, wherein the horizontal protrusion of the hook clamps against the bottom surface (underside) of the upper portion, while the fastener presses onto an upper surface of the upper portion of the seat rail (and the remainder of the hook encloses the straight edge).

In an implementation variant, the fastener can comprise a plate configured to press against the upper surface of the upper portion of the seat rail. The plate of the fastener can form a widened portion of the fastener. For instance, in general the fastener can be a threaded fastener or screw or the like, one end of which can press against the upper surface of the upper portion of the seat rail. In this implementation variant, however, the end of the fastener pressing against the upper surface of the upper portion is provided with a plate, in order to increase the area of the fastener being in contact with the upper surface of the upper portion. Thus, the area of friction can be increased.

In a further implementation variant, the fastener is a quick fastener or quick lock configured to press the fastener against the upper portion of the seat rail with a simple movement (e.g., by a lever or screw or the like).

In another implementation variant, the seat mounting system can further comprise a seal configured to cover one or more of the plurality of holes of the seat rail. Such seal can have a substantially flat shape covering the one or more holes. For instance, the seal can lie on the upper surface of the upper portion of the seat rail and can be sized larger than the one or more holes.

Alternatively or additionally, the seal can have a shape fitting into one of the holes, like a plug. It is to be understood that the seal can have a flat shape with one or more protrusions, each of which can be plugged into one of the holes.

In yet another implementation variant, the seat fitting further comprises an upper portion. The seal can then be further configured to be mounted underneath the upper portion of the seat fitting. For instance, the seal can have one or more openings, while each hook of the seat fitting is inserted through a respective hole. Thus, the seal can be arranged between an upper surface of the upper portion of the seat rail and a bottom surface of the upper portion of the seat fitting, while the hooks penetrate through the seal and can be inserted into the holes of the seat rail. In a further implementation variant, the seat fitting can further comprise a seat mount configured to mount a seat or seats thereto. Such seat mount can form an upward protrusion with a through hole, in order to receive a bolt for mounting the seat. Alternatively, the seat mount can have a threaded hole, into which a threaded fastener of the seat can be screwed. It is to be understood that any form of seat mount may be provided with the seat fitting, and particularly a standardised seat mount.

In an implementation variant, the upper portion of the seat rail can comprise a rising portion, so that the plurality of holes is arranged at a raised level. In other words, a cross-sectional shape of the upper portion (when viewing along the longitudinal direction of the seat rail) may have an omega-shape or the shape of an upside-down "U". Such raised level facilitates access to the plurality of holes and, hence, facilitates insertion of the hooks into the holes.

In a further implementation variant, the rising portion of the seat rail can have a height corresponding to a height of a floor element. Thus, the topmost surface of the seat rail, i.e. the section of the seat rail including the holes, can be flush with an upper surface of the floor element. This allows integrating the seat rail into the floor of the vehicle, while providing a good access to the holes. The floor element can form the surface, on which passengers and personal walk. As a mere example, the floor element arranged directly adjacent to the seat rail can be a carpet or the like.

In yet a further implementation variant, the seat rail has a one-piece body. In other words, the seat rail is integrally formed, i.e. constitutes only one piece of material.

For example, the one-piece seat rail can be made by extrusion. The material of the seat rail is then extruded along the longitudinal direction of the seat rail. Alternatively, the one-piece seat rail can be made by cold drawing. Both processes allow manufacturing an endless seat rail.

According to a further example, the plurality of holes can be punched or cut into the one-piece body. Thus, a fast manufacturing of a continuous seat rail can be achieved.

In another implementation variant, the seat rail can be made by pressing. For instance, the pressing forces may act perpendicularly to the longitudinal direction and the transverse direction of the seat rail. Thus, one or more seat rails can be formed from a sheet of material, such as a metal or plastic, in a single press action.

As a mere example, the seat rail can be made by cold-pressing a sheet of material. Of course, warm-pressing can also be applied, for example, if thermoplastic deformation of the sheet can be employed.

In yet another implementation variant, the plurality of holes can be made during the pressing. Thus, a fast manufacturing process can be implemented, since the holes are made at the same time when the (cross-sectional) shape of the seat rail is formed.

For example, the holes can be formed by cutting the upper portion along the straight edge and press forming a section of the upper portion adjacent to the straight edge to a level below the straight edge. In other words, the upper portion maintains its original plane (of the employed sheet) on one side of the straight edge, while the sheet material is bent (pressed) downwards on the other side of the straight edge. This bending (pressing) of the sheet on one side of the straight edge forms a hole (or recess) in the seat rail, so that the hook can reach the bottom surface of the upper portion.

It is to be understood that the holes can be made during pressing by completely cutting a portion out of the sheet material, i.e. punching a portion of the sheet. The cut or punched portion can have any desired form with the straight edge being provided on the one side.

In another implementation variant, the supporting structure can further comprise an upper flange. The upper portion of the seat rail can be mounted on the upper flange. The upper flange, for example, can be arranged horizontally, so that the upper portion can lie on the upper flange. The upper portion of the seat rail can be mounted by one or more fasteners to the upper flange. Alternatively or additionally, the upper portion of the seat rail and the upper flange can be welded or adhered to one another.

According to a second aspect to better understand the present disclosure, a vehicle can comprise a seat mounting system according to the first aspect or one of its variants.

The vehicle can be an aircraft, a bus, a train or other passenger vehicle.

In an implementation variant, the vehicle can further comprise a plurality of seats or seat rows, which are mounted to a floor of the vehicle using the seat mounting system. The seat rail of the seat mounting system is integrated to mounted to the floor of the vehicle.

According to a third aspect to better understand the present disclosure, the seat mounting system of the first aspect or one of its variants can be employed to secure cargo or other items to a floor. Thus, the present disclosure is not restricted to seats to be mounted to a floor.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof, the invention being defined exclusively by the appended claims.

In the following, the present disclosure will further be described with reference to exemplary implementations illustrated in the figures, in which:
- Figure 1: schematically illustrates cross sections of exemplary seat rails;
- Figure 2: schematically illustrates cross sections of other exemplary seat rails;
- Figure 3: schematically illustrates a top view and a cross-section of a seat rail;
- Figure 4: schematically illustrates cross sections of seat fittings and a top view of a seat rail with mounting positions for seat fittings;
- Figure 5: schematically illustrates a cross-section of an installed seat mounting system; and
- Figure 6: schematically illustrates a vehicle comprising a seat mounting system.

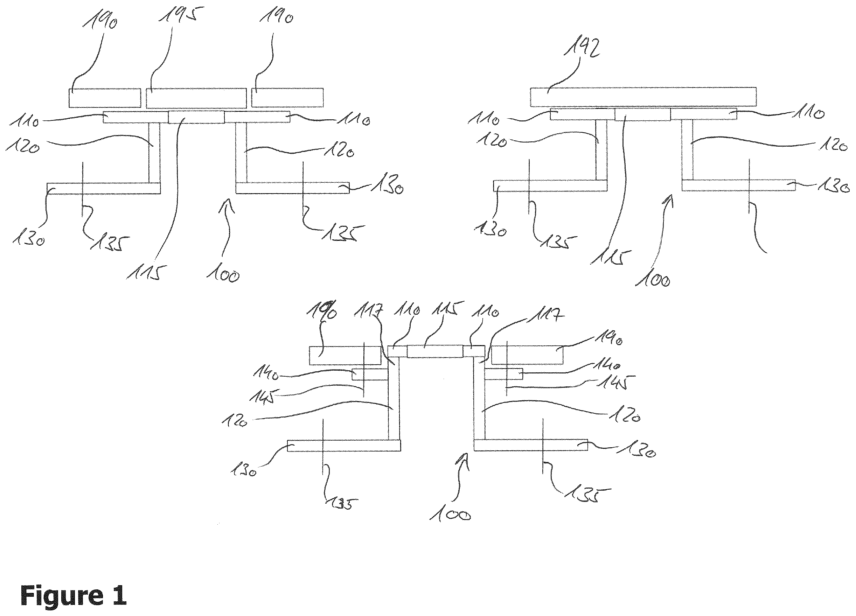

In the following description, for purposes of explanation and not limitation, specific details are set forth in order to provide a thorough understanding of the present disclosure. It will be apparent to one skilled in the art that the present disclosure may be practiced in other implementations that depart from these specific details. Figure 1 schematically illustrates cross sections of exemplary seat rails 100. While the upper seat rails 100 in Figure 1 are the same, the lower seat rail 100 in Figure 1 has a different cross-sectional shape. All seat rails 100 of Figure 1 can have a one-piece body. Although the individual sections of the seat rails 100 are illustrated as separate rectangular elements, it is to be understood that this is for illustrative purposes only. For example, each of the seat rails 100 can be made by extrusion or cold/warm-drawing, so that the entire seat rail 100 is made integrally from one material.

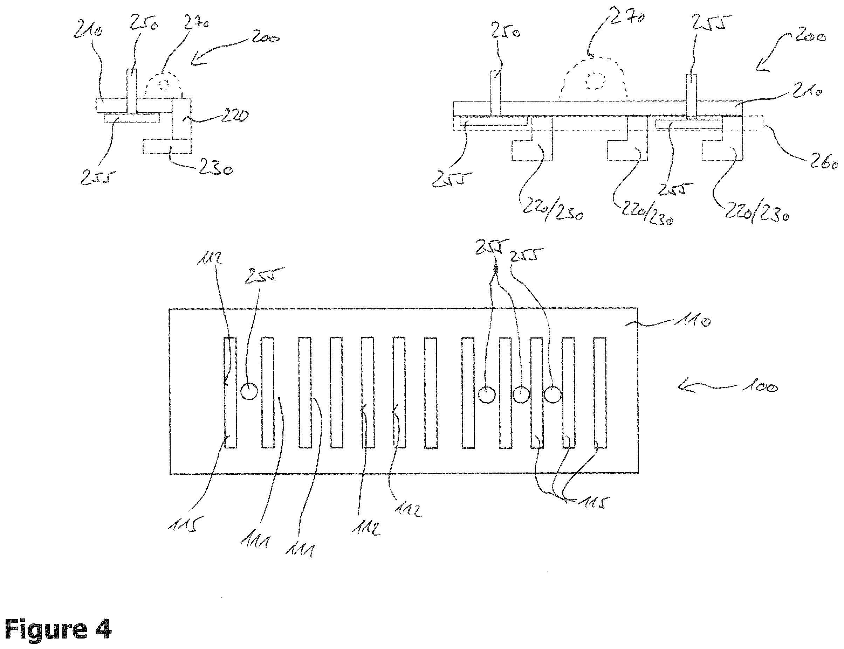

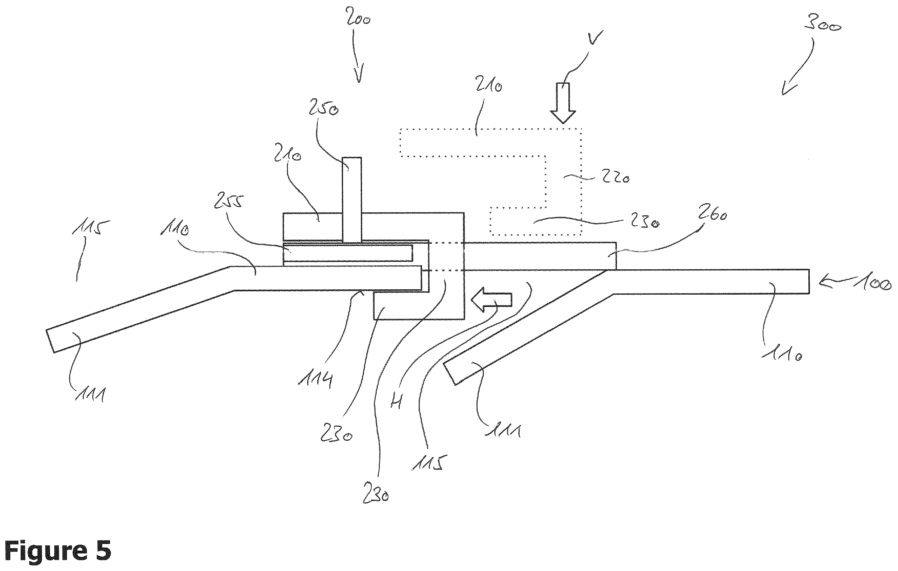

The seat rail 100 in its basic form comprises an upper portion 110 having a plurality of holes 115 (only one hole 115 can be seen in the cross sections of Figure 1). The upper portion 110 is used to couple a seat fitting 200 thereto, as it will be explained with respect to Figures 4 and 5 in more detail. The upper portion 110 forms a topmost part of the seat rail 100, in order to be accessible for the seat fitting 200.

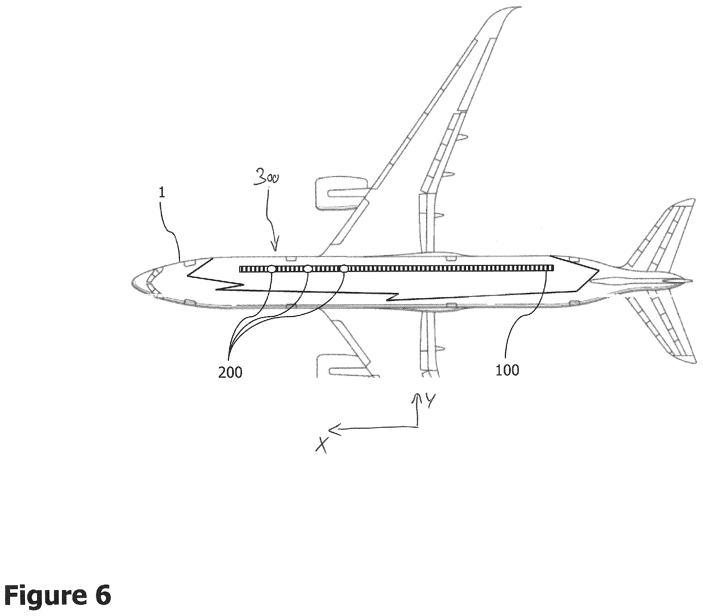

When the seat rail 100 is installed in a vehicle 1 (Figure 6), a floor element 190 can be laid out in the vehicle 1. In the upper left seat rail 100 of Figure 1, the floor element 190 is omitted in an area of the upper portion 110 comprising the plurality of holes 115. Thus, the holes 115 can easily be reached. In addition, in order to protect the seat rail 100, a filler 195 can be provided in areas of the seat rail 100, where no seat fitting 200 is coupled. Thus, the floor element 190 and filler 195 can be flush and form a continuous top surface.

Alternatively, as illustrated in the upper right seat rail 100 of Figure 1, a continuous floor element 192 can be provided. Thus, the seat rail 100 can be completely hidden. It is to be understood that a portion of the continuous floor element 192 has to be cut out in an area, where a seat fitting 200 is to be installed.

In the lower seat rail 100 of Figure 1, the upper portion 110 of the seat rail 100 comprises a rising portion 117. This allows to bring the plurality of holes 115 to a raised level. As a mere example, a floor element 190 can be provided on both sides of the raised part of the upper portion 110. For instance, the rising portion 117 of the seat rail 100 can have a height corresponding to a height of such floor element 190, in order to form a flush surface with floor element 190 and upper portion 110.

The upper portion 110, in this case, can further include lateral flanges 140. These lateral flanges 140 allow mounting the floor element/s 190 to the seat rail 100. A fastener 145 is illustrated in the lower drawing of Figure 1 to illustrate this mounting of the floor element/s 190. It is to be understood that each of the floor elements 190 can also be adhered to the upper portion 110, particularly the lateral flange 140. In the same manner, the floor element/s 190, 192, 195 can be mounted to the upper portion 110 of the seat rail 100 (although a fastener is not illustrated).

The seat rail 100 can further comprise a supporting structure 120, 130 arranged underneath the upper portion 110 excluding an area underneath the holes 115. In other words, in an area of the plurality of holes 115, the support structure 120, 130 can be omitted. This allows fluid or other items entering through one of the holes 115 to flow or fall away.

As a mere example, the supporting structure can include a bar 120 and a flange 130. The bar 120 can extend from the upper portion 110 to the flange 130 and substantially defines the height of the seat rail 100. In case the seat rail 100 has a rising portion 117, such rising portion 117 can be integrally formed with the bar 120, i.e. can be one and the same seat rail component.

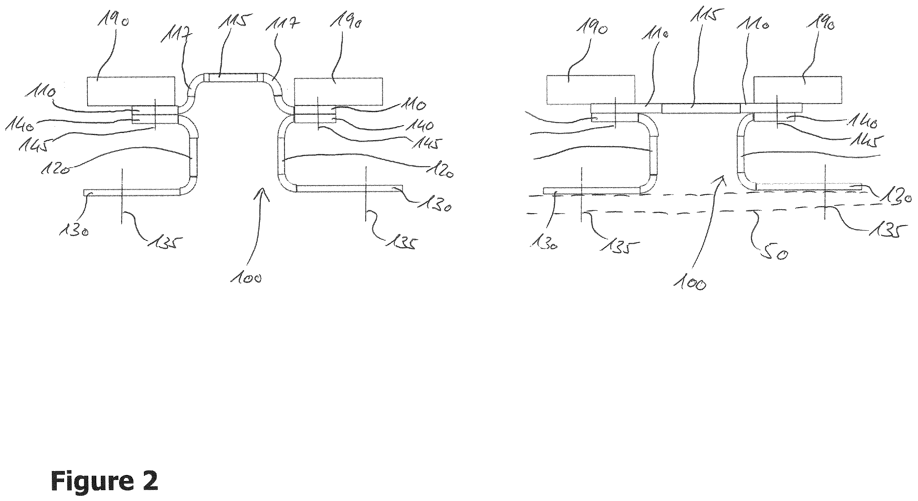

The (lower) flange 130 can be used to fasten the seat rail 100 to a floor structure 50 (Figure 2). For example, a fastener 135 can be used, which is only schematically illustrated in Figure 1. Instead of a fastener 135, the seat rail 100 can also be welded or adhered to the floor structure 50.

The cross-sectional shape of the seat rail 100 as illustrated in Figure 1 is chosen, in order to form the seat rail 100 by extrusion or cold/warm-drawing. Thus, the seat rail 100 can be made in a fast manner and with an integral one-piece body.

A similar seat rail 100 is illustrated in Figure 2, which allows a different way of manufacturing. The elements and components of the seat rail 100 being the same as those in Figure 1, have been provided with the same reference numerals, and they are only briefly explained to avoid redundant disclosure. Specifically, as in the example of Figure 1, the seat rails 100 of Figure 2 comprise an upper portion 110 with a plurality of holes 115. Likewise, the seat rail 100 can have a rising portion 117 (to the left in Figure 2) or can have a flat top surface (to the right in Figure 2). A floor element 190 can also be provided on both sides of the holes 115, or can cover the entire seat rail 100 (not illustrated in Figure 2).

Compared to the exemplary seat rail 100 of Figure 1, the seat rails of Figure 2 can be manufactured by pressing, such as cold-pressing. For example, the upper portion 110 can be made by pressing, wherein the plurality of holes 115 is made during the pressing by cutting the upper portion 110.

Likewise, the rising portion 117 can be formed during pressing.

A supporting structure 120, 130, 140 can be made by pressing a sheet material to a U-shaped or J-shaped form. At a lateral flange 140 the supporting structure/s can be mounted to the upper portion 110 (as a mere example, via fasteners 145). It is to be understood that the lataeral flange 140 and the upper portion 110 can also be manufactured by pressing, wherein the sheet material is bent and folded onto one another, i.e. forms a 180° turn. Since such 180° bents may be more time-consuming, the manufacturing of separate sections (upper portion 110 and supporting structure 120, 130, 140) may be more efficient.

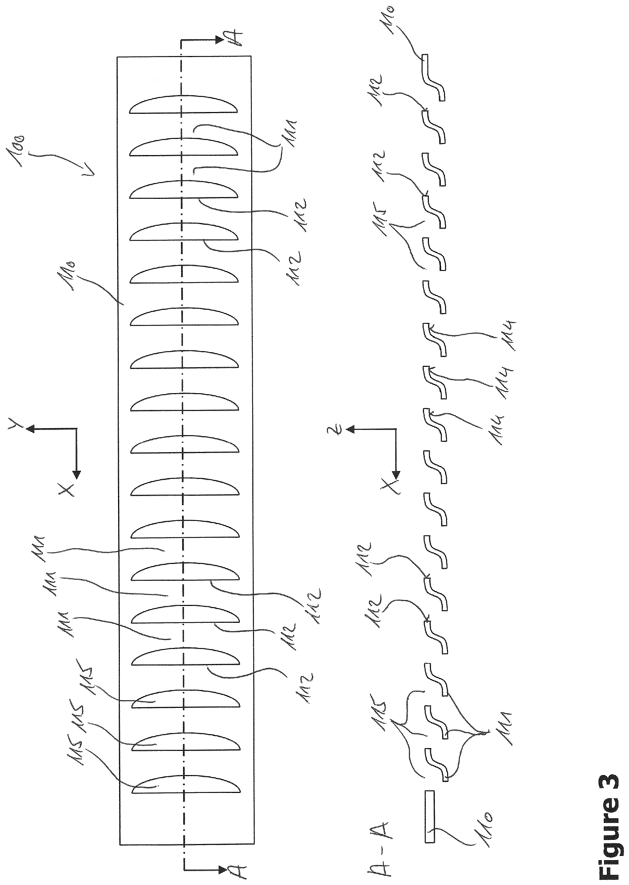

Figure 3 schematically illustrates a top view and a cross-section of a seat rail 100. It is to be noted that the seat rail 100 of Figure 3 does not include a supporting structure 120, 130, 140. It is to be understood that, of course, the seat rail 100 of Figure 3 can also be equipped with a (non-illustrated) supporting structure 120, 130, 140 or further components. Thus, the seat rail 100 of Figure 3 may also correspond to the seat rail 100 of Figure 1 or 2.

The seat rail 100 comprises a plurality of holes 115 in the upper portion 110. Each of the plurality of holes 115 comprises a straight edge 112 extending in a transverse direction (Y-axis) of the seat rail 100. The hole 115 then further extends in the longitudinal direction (X-axis) of the seat rail 100.

The plurality of holes 115 may be formed by punching, cutting, milling or machining the plurality of holes 115 into a one-piece body of the seat rail 100, particularly in a one-piece body of the seat rail 100. Alternatively, the plurality of holes 115 can be made during pressing, e.g., by cutting the upper portion 110 along the straight edge 112 and press forming a section 111 of the upper portion 110 adjacent to the straight edge 112 to a level below the straight edge 112 (i.e., in the negative Z-axis direction). Thus, a plurality of recesses are formed in the upper portion 110.

Figure 4 schematically illustrates cross sections of seat fittings 200 and a top view of a seat rail 100 with mounting position for seat fittings 200.

A seat fitting 200 is configured to be coupled with a seat rail 100. This is accomplished by at least one hook 220, 230 and configured to be inserted into one of the plurality of holes 115 of the seat rail 100 and to hook around the straight edge 112 of the associated holes 115. Figure 4 illustrates two different seat fittings 200, one having only one hook 220, 230 (upper left drawing in Figure 4), the other one having a plurality of hooks 220, 230, such as three hooks 220, 230 (upper right drawing in Figure 4). For example, the seat fitting 200 having only one hook 220, 230 can be employed as a front seat fitting 200 holding a front portion of a seat foot or leg (not illustrated). The seat fitting 200 having a plurality of hooks 220, 230 can be employed as a rear seat fitting 200 holding a rear portion of a seat foot or leg, which usually induces larger forces into the seat rail 100 compared to the front seat fitting 200.

The seat fitting 200 comprises a fastener 250 configured to press against the upper portion 110 of the seat rail 100. As a mere example, the fastener 250 can be a threaded fastener, quick fastener, quick lock or the like which can move relative to the hook in a downwards direction (i.e., towards the hook 220, 230). The fastener 250 can be equipped with a plate 255 which increases the area being in contact with the upper portion 110 of the seat rail 100.

As illustrated in Figure 4, the seat fitting 200 having a plurality of hooks 220, 230 may also comprise a plurality of fasteners 250, such as the illustrated two fasteners 250.

In any case, the fasteners 250 can be coupled to an upper portion 210 of the seat fitting 200. Such upper portion 210 can be arranged substantially parallel to a horizontal protrusion 230 of the hook. Thus, the upper portion 210 and the horizontal protrusion 230 form a clamp, and the fastener 250 can clamp any item between the bottom end of the fastener 250 or the plate 255 and the horizontal protrusion 230.

Moreover, the seat fitting 200 can further comprise a seal 260 configured to cover one or more of the plurality of holes 115 in the seat rail 100. As illustrated in Figure 4, such seal 260 can, for example, be mounted underneath the upper portion 210 of the seat fitting 200. Thus, the seal 260 is pressed onto the item, which is clamped between the fastener 250 and the horizontal protrusion 230. The seal 260 may comprise one or more openings, through which the hooks 220, 230 penetrate.

Furthermore, the seat fitting 200 can be equipped with a seat mount 270 configured to mount one or more seats thereto. This seat mount 270 can be any standardised seat mount, for example, including a through hole for a bolt or the like.

Each of the hooks 220, 230 can be inserted into one of the plurality of holes 115. For instance, this can be achieved in a vertical movement. When the fastener 250 or the plate 255 is then arranged on the upper portion 110 of the seat rail 100, the fastener/plate 250, 255 presses on an upper surface of the upper portion 110, as it is illustrated in the lower drawing of Figure 4. The hook 220, 230 as well as the upper portion 210 of the seat fitting 200 is then lifted upwards relative to the upper portion 110 of the seat rail 100, until the horizontal protrusion 230 of the hook abuts against a bottom surface 114 (Figures 3 and 5) of the upper portion 110 of the seat rail 100.

Figure 5 schematically illustrates a cross-section of a seat mounting system 300. The seat mount system 300 comprises a seat rail 100 and a seat fitting 200. Figure 5 illustrates a seat fitting 200 having only one hook 220, 230 for illustrative purposes. A seat fitting 200 having a plurality of hooks 220, 230 can likewise be employed in such seat mounting system 300. It is to be understood that any seat rail 100 shown in Figures 1 to 4 can be employed as the seat rail 100 of the seat mounting system 300.

The seat fitting 200 illustrated in dashed lines in Figure 5 (without the fastener 250 for clarity reasons) is brought into correspondence with a hole 115 of the seat rail 100 (with respect to the longitudinal direction). When the horizontal protrusion 230 is above the hole 115, the seat fitting 200 can be moved vertically downwards (indicated by "V" arrow), so that the horizontal protrusion 230 moves through the hole 115.

Thereafter, a horizontal movement (indicated by "H" arrow) can be performed with the seat fitting 200, so that the horizontal protrusion 230 comes underneath the bottom surface 114 of the upper portion 110 of the seat rail 100. The rather vertical portion 220 of the hook can thereby abut against the straight edge 112 of the hole 115.

The section 111 of the upper portion 110 below the straight edge 112 (e.g., the bent down or press formed portion 111 of the upper portion 110) is far enough for the hook 220, 230 to reach its final coupled position. In addition, the bent down section 111 can have a shape that allows guiding the hook 220, 230 into its final coupled position when a right lower corner of the hook 220, 230 slides on the section 111.

Thus, the seat fitting 200 is coupled to the seat rail 100. Using the fastener 250, 255, the seat fitting 200 can be fixed, i.e. clamped, to the upper portion 110 of the seat rail 100, i.e. the plate 255 and the horizontal protrusion 230 squeeze the upper portion 110 at the straight edge 112 therebetween.

The seal 260 can be arranged in such a manner, that it is pressed by the upper portion 210 of the seat fitting 200 and/or by the fastener 250 onto the upper surface 110 of the seat rail 100. The seal 260 can be sized to cover the entire hole 115 (to the right of hook 220 in Figure 5).

Figure 6 schematically illustrates a vehicle 1 comprising a seat mounting system 300.

The vehicle 1 can be an aircraft (as illustrated), a bus, a train or a ship. The seat rail 100 of the seat mounting system 300 can run substantially through the entire aircraft 1, particularly along its longitudinal direction. Although Figure 6 shows only one seat rail 100, it is to be understood that a plurality of seat rails can be arranged in the aircraft 1 parallel to one another. One or more seat fittings 200 can be coupled to the seat rail 100. Figure 6 shows only three seat fittings 200 for clarity reasons.

As a mere example, a pair of seat fittings 200 arranged adjacent to one another in the longitudinal direction of the seat rail 100 can be used to mount a passenger seat or a passenger seat row to the seat rail 100.

Alternatively, the seat fitting 200 can be used to secure cargo (e.g., packages with a net, a strip, a container, etc.) to the seat rail 100.

## Claims

1. A seat mounting system (300), comprising:
a seat rail (100) configured to be mounted to a floor (50); and
a seat fitting (200) configured to be coupled with the seat rail (100),
wherein the seat rail (100) comprises an upper portion (110) having a plurality of holes (115), wherein each hole (115) comprises a straight edge (112) extending in a transverse direction of the seat rail (100), and
wherein the seat fitting (200) comprises at least one hook (220, 230) configured to be inserted into one of the plurality of holes (115) and to hook around the straight edge (112),
wherein the seat fitting (200) further comprises:
a fastener (250) arranged above an upper surface of the upper portion (110), when the at least one hook (220, 230) hooks around the straight edge (112), **characterised in that**
the fastener (250) is configured to press against the upper portion (110) of the seat rail (100), and, when moving towards the at least one hook (220, 230), to pull the at least one hook (220, 230) towards the fastener (250), thereby clamping the at least one hook (220, 230) to the upper portion (110) of the seat rail (100).

2. The seat mounting system (300) according to claim 1, wherein the seat rail (100) further comprises a supporting structure (120, 130) arranged underneath the upper portion (110) excluding an area underneath the holes (115).

3. The seat mounting system (300) according to claim 1 or 2, wherein the at least one hook (220, 230) comprises a horizontal protrusion (230) sized to fit through the hole (115) in a substantially vertical movement and to abut against a bottom surface (114) of the upper portion (110).

4. The seat mounting system (300) according to one of claims 1 to 3, wherein the fastener (250) comprises a plate configured to press against the upper surface of the upper portion (110) of the seat rail (100).

5. The seat mounting system (300) according to one of claims 1 to 4, further comprising:
a seal (260) configured to cover one or more of the plurality of holes (115) of the seat rail (100).

6. The seat mounting system (300) according to claim 5, wherein the seat fitting (200) further comprises an upper portion (210), and wherein the seal (260) is further configured to be mounted underneath the upper portion (210) of the seat fitting (200).

7. The seat mounting system (300) according to one of claims 1 to 6, wherein the seat fitting (200) further comprises a seat mount (270) configured to mount a seat or seats thereto.

8. The seat mounting system (300) according to one of claims 1 to 7, wherein the upper portion (110) of the seat rail (100) comprises a rising portion (117), so that the plurality of holes (115) is arranged at a raised level,
wherein, preferably, the rising portion (117) of the seat rail (100) has a height corresponding to a height of a floor element (190).

9. The seat mounting system (300) according to one of claims 1 to 8, wherein the seat rail (100) has a one-piece body, preferably made by extrusion,
wherein, further preferably, the plurality of holes (115) is punched or cut into the one-piece body.

10. The seat mounting system (300) according to one of claims 1 to 8, wherein the seat rail (100) is made by pressing, preferably cold-pressing,
wherein, further preferably, the plurality of holes (115) is made during the pressing by cutting the upper portion (110) along the straight edge (112) and press forming a section (111) of the upper portion (110) adjacent to the straight edge (112) to a level below the straight edge (112).

11. The seat mounting system (300) according to claim 10, when dependent on claim 2, wherein the supporting structure (120, 130) further comprises an upper flange (140), and wherein the upper portion (110) of the seat rail (100) is mounted on the upper flange (140).

12. A vehicle (1) comprising a seat mounting system (300) according to one of claims 1 to 11.

## Patentansprüche

1. Eine Sitzbefestigungsanordnung (300), umfassend:
eine Sitzschiene (100), die dazu konfiguriert ist, an einem Fahrzeugboden (50) montiert zu werden; und
einen Sitzbeschlag (200), der dazu konfiguriert ist, mit der Sitzschiene (100) gekoppelt zu werden, wobei die Sitzschiene (100) einen oberen Abschnitt (110) mit einer Vielzahl von Löchern (115) umfasst, wobei jedes Loch (115) eine gerade Kante (112) umfasst, die sich in einer Querrichtung der Sitzschiene (100) erstreckt, und wobei der Sitzbeschlag (200) mindestens einen Haken (220, 230) umfasst, der dazu konfiguriert ist, in eines der Vielzahl von Löchern (115) eingeführt zu werden und sich um die gerade Kante (112) einzuhaken, wobei der Sitzbeschlag (200) ferner umfasst: ein Befestigungselement (250), das oberhalb einer oberen Oberfläche des oberen Abschnitts (110) angeordnet ist, wenn der mindestens eine Haken (220, 230) um die gerade Kante (112) eingehakt ist,
**dadurch gekennzeichnet, dass**
das Befestigungselement (250) dazu konfiguriert ist, gegen den oberen Abschnitt (110) der Sitzschiene (100) zu drücken, und, bei Bewegung in Richtung des mindestens einen Hakens (220, 230), den mindestens einen Haken (220, 230) in Richtung des Befestigungselements (250) zu ziehen, wodurch der mindestens eine Haken (220, 230) an den oberen Abschnitt (110) der Sitzschiene (100) geklemmt wird.

2. Die Sitzbefestigungsanordnung (300) nach Anspruch 1, wobei die Sitzschiene (100) ferner eine Stützstruktur (120, 130) umfasst, die unterhalb des oberen Abschnitts (110) mit Ausnahme eines Bereichs unterhalb der Löcher (115) angeordnet ist.

3. Die Sitzbefestigungsanordnung (300) nach Anspruch 1 oder 2, wobei der mindestens eine Haken (220, 230) einen horizontalen Vorsprung (230) umfasst, der so bemessen ist, dass er in einer im Wesentlichen vertikalen Bewegung durch das Loch (115) passt und an einer unteren Oberfläche (114) des oberen Abschnitts (110) anliegt.

4. Die Sitzbefestigungsanordnung (300) nach einem der Ansprüche 1 bis 3, wobei das Befestigungselement (250) eine Platte umfasst, die dazu konfiguriert ist, gegen die obere Oberfläche des oberen Abschnitts (110) der Sitzschiene (100) zu drücken.

5. Die Sitzbefestigungsanordnung (300) nach einem der Ansprüche 1 bis 4, ferner umfassend: eine Dichtung (260), die dazu konfiguriert ist, eines oder mehrere der Vielzahl von Löchern (115) der Sitzschiene (100) zu bedecken.

6. Die Sitzbefestigungsanordnung (300) nach Anspruch 5, wobei der Sitzbeschlag (200) ferner einen oberen Abschnitt (210) umfasst, und wobei die Dichtung (260) ferner dazu konfiguriert ist, unterhalb des oberen Abschnitts (210) des Sitzbeschlags (200) montiert zu werden.

7. Die Sitzbefestigungsanordnung (300) nach einem der Ansprüche 1 bis 6, wobei der Sitzbeschlag (200) ferner eine Sitzhalterung (270) umfasst, die dazu konfiguriert ist, daran einen Sitz oder Sitze zu montieren.

8. Die Sitzbefestigungsanordnung (300) nach einem der Ansprüche 1 bis 7, wobei der obere Abschnitt (110) der Sitzschiene (100) einen ansteigenden Abschnitt (117) umfasst, so dass die Vielzahl von Löchern (115) auf einer erhöhten Ebene angeordnet ist, wobei vorzugsweise der ansteigende Abschnitt (117) der Sitzschiene (100) eine Höhe aufweist, die einer Höhe eines Bodenelements (190) entspricht.

9. Die Sitzbefestigungsanordnung (300) nach einem der Ansprüche 1 bis 8, wobei die Sitzschiene (100) einen einteiligen Körper aufweist, der vorzugsweise durch Extrusion hergestellt ist, wobei ferner vorzugsweise die Vielzahl von Löchern (115) in den einteiligen Körper gestanzt oder geschnitten ist.

10. Die Sitzbefestigungsanordnung (300) nach einem der Ansprüche 1 bis 8, wobei die Sitzschiene (100) durch Pressen, vorzugsweise Kaltpressen, hergestellt ist, wobei ferner vorzugsweise die Vielzahl von Löchern (115) während des Pressens durch Schneiden des oberen Abschnitts (110) entlang der geraden Kante (112) und Pressformen eines Teils (111) des oberen Abschnitts (110) neben der geraden Kante (112) auf eine Ebene unterhalb der geraden Kante (112) hergestellt wird.

11. Die Sitzbefestigungsanordnung (300) nach Anspruch 10, wenn abhängig von Anspruch 2, wobei die Stützstruktur (120, 130) ferner einen oberen Flansch (140) umfasst, und wobei der obere Abschnitt (110) der Sitzschiene (100) auf dem oberen Flansch (140) montiert ist.

12. Ein Fahrzeug (1), umfassend eine Sitzbefestigungsanordnung (300) nach einem der Ansprüche 1 bis 11.

## Revendications

1. Un système de fixation de siège (300), comprenant:
un rail de siège (100) configuré pour être monté sur un plancher (50); et
un raccord de siège (200) configuré pour être couplé avec le rail de siège (100),
dans lequel le rail de siège (100) comprend une portion supérieure (110) ayant une pluralité de trous (115), dans lequel chaque trou (115) comprend un bord droit (112) s'étendant dans une direction transversale du rail de siège (100), et
dans lequel le raccord de siège (200) comprend au moins un crochet (220, 230) configuré pour être inséré dans l'un de la pluralité de trous (115) et pour s'accrocher autour du bord droit (112), dans lequel le raccord de siège (200) comprend en outre: un élément de fixation (250) agencé au-dessus d'une surface supérieure de la portion supérieure (110), lorsque l'au moins un crochet (220, 230) est accroché autour du bord droit (112),
**caractérisé en ce que**
l'élément de fixation (250) est configuré pour presser contre la portion supérieure (110) du rail de siège (100), et, lors du déplacement vers l'au moins un crochet (220, 230), pour tirer l'au moins un crochet (220, 230) vers l'élément de fixation (250), serrant ainsi l'au moins un crochet (220, 230) à la portion supérieure (110) du rail de siège (100).

2. Le système de fixation de siège (300) selon la revendication 1, dans lequel le rail de siège (100) comprend en outre une structure de support (120, 130) agencée sous la portion supérieure (110) à l'exclusion d'une zone sous les trous (115).

3. Le système de fixation de siège (300) selon la revendication 1 ou 2, dans lequel l'au moins un crochet (220, 230) comprend une saillie horizontale (230) dimensionnée pour passer à travers le trou (115) dans un mouvement sensiblement vertical et pour venir en butée contre une surface inférieure (114) de la portion supérieure (110).

4. Le système de fixation de siège (300) selon l'une des revendications 1 à 3, dans lequel l'élément de fixation (250) comprend une plaque configurée pour presser contre la surface supérieure de la portion supérieure (110) du rail de siège (100).

5. Le système de fixation de siège (300) selon l'une des revendications 1 à 4, comprenant en outre: un joint (260) configuré pour couvrir un ou plusieurs de la pluralité de trous (115) du rail de siège (100).

6. Le système de fixation de siège (300) selon la revendication 5, dans lequel le raccord de siège (200) comprend en outre une portion supérieure (210), et dans lequel le joint (260) est en outre configuré pour être monté sous la portion supérieure (210) du raccord de siège (200).

7. Le système de fixation de siège (300) selon l'une des revendications 1 à 6, dans lequel le raccord de siège (200) comprend en outre une monture de siège (270) configurée pour y monter un siège ou des sièges.

8. Le système de fixation de siège (300) selon l'une des revendications 1 à 7, dans lequel la portion supérieure (110) du rail de siège (100) comprend une portion montante (117), de sorte que la pluralité de trous (115) est agencée à un niveau surélevé, dans lequel, de préférence, la portion montante (117) du rail de siège (100) a une hauteur correspondant à une hauteur d'un élément de plancher (190).

9. Le système de fixation de siège (300) selon l'une des revendications 1 à 8, dans lequel le rail de siège (100) a un corps monobloc, de préférence réalisé par extrusion, dans lequel, plus préférablement, la pluralité de trous (115) est poinçonnée ou découpée dans le corps monobloc.

10. Le système de fixation de siège (300) selon l'une des revendications 1 à 8, dans lequel le rail de siège (100) est réalisé par pressage, de préférence par pressage à froid, dans lequel, plus préférablement, la pluralité de trous (115) est réalisée pendant le pressage en découpant la portion supérieure (110) le long du bord droit (112) et en formant par pressage une section (111) de la portion supérieure (110) adjacente au bord droit (112) à un niveau inférieur au bord droit (112).

11. Le système de fixation de siège (300) selon la revendication 10, lorsqu'elle dépend de la revendication 2, dans lequel la structure de support (120, 130) comprend en outre une bride supérieure (140), et dans lequel la portion supérieure (110) du rail de siège (100) est montée sur la bride supérieure (140).

12. Un véhicule (1) comprenant un système de fixation de siège (300) selon l'une des revendications 1 à 11.
